# EUROPEAN PATENT SPECIFICATION

(11) **EP 2 434 631 B1**
(45) Date of publication and mention of the grant of the patent: **15.07.2020**
(21) Application number: 09844840.0
(22) Date of filing: 22.05.2009
(51) Int. Cl.: H02M 5/458, F03D 9/00, H02M 1/12, H02M 1/44, H02M 1/14, H02M 1/32, H02J 3/38

(54) **PROTECTION CIRCUIT FOR A WIND-POWER GENERATOR**
SCHUTZSCHALTUNG FÜR EINEN WINDKRAFTGENERATOR
CIRCUIT DE PROTECTION D'UN AÉROGÉNÉRATEUR

(43) Date of publication of application: 28.03.2012
(73) Proprietor: Ingeteam Power Technology, S.A., 48170 Zamudio (Bizkaia) (ES)
(72) Inventor: MAYOR LUSARRETA, Jesús, E-31621 SARRIGUREN (Navarra) (ES); GIRONÉS REMÍREZ, Carlos, E-31621 SARRIGUREN (Navarra) (ES); ACEDO SÁNCHEZ, Jorge, E-31621 SARRIGUREN (Navarra) (ES); CARCAR MAYOR, Ainhoa, E-31621 SARRIGUREN (Navarra) (ES); ZABALETA GOÑI, Mikel, E-31621 SARRIGUREN (Navarra) (ES); SOLÉ LÓPEZ, David, E-31621 SARRIGUREN (Navarra) (ES)
(74) Representative: Igartua, Ismael
(86) International application number: PCT/ES2009/070178
(87) International publication number: WO 2010/133721

(56) References cited:
- EP-A2- 1 143 602
- EP-A2- 1 143 602
- DE-A1- 10 353 192
- JP-A- H10 210 649
- US-A1- 2007 177 314
- DONGSHENG ZHAO ET AL: "Common-Mode DC-Bus Filter Design for Variable-Speed Drive System via Transfer Ratio Measurements", IEEE TRANSACTIONS ON POWER ELECTRONICS, IEEE SERVICE CENTER, PISCATAWAY, NJ, US, vol. 24, no. 2, 1 February 2009 (2009-02-01), pages 518-524, XP011249754, ISSN: 0885-8993
- DE OLIVEIRA T ET AL: "Reduction of conducted EMC using busbar stray elements", APPLIED POWER ELECTRONICS CONFERENCE AND EXPOSITION, 2009. APEC 2009. TWENTY-FOURTH ANNUAL IEEE, IEEE, PISCATAWAY, NJ, USA, 15 February 2009 (2009-02-15), pages 2028-2033, XP031442973, ISBN: 978-1-4244-2811-3
- ZHAO, D. ET AL.: 'Common Mode DC-Bus Filter Design for Variable Speed Drive System via Transfer Ratio Measurements.' POWER ELECTRONICS, IEEE TRANSACTIONS vol. 24, no. 2, February 2009, pages 518 - 524, XP011249754
- DE OLIVEIRA ET AL.: 'Reduction of conducted EMC using busbar stray elements.' APPLIED POWER ELECTRONICS CONFERENCE AND EXPOSITION, 2009. APEC 2009. 15 February 2009 - 19 February 2009, pages 2028 - 2033, XP031442973
- ADABI J. ET AL.: 'Analysis, calculation and reduction of shaft voltage in induction generators.' PROCEEDINGS OF THE INTERNATIONAL CONFERENCE ON RENEWABLE ENERGY AND POWER QUALITY, [Online] 15 April 2009 - 17 April 2009, VALENCIA, XP008164741 Retrieved from the Internet: <URL:http://eprints.qut.edu.au/20191/2/2019 1.pdf> [retrieved on 2010-02-01]

## Description

### OBJECT OF THE INVENTION

The object of the invention is to provide an additional path for the earth currents of a wind turbine or wind-power generator, in order to reduce the overvoltage between phase and earth in the generator terminals.

### BACKGROUND OF THE INVENTION

In recent years the number of wind turbines (also known as wind-power generators) and wind farms connected to the power grid has experienced a notable increase.

The first wind turbines were fixed-speed turbines, and the generator was coupled directly to the power grid. Variable speed wind turbines later appeared that use power converters to control the generator. This kind of system (a system being the set of generator, power converter and manoeuvring elements) is known as Doubly Fed Induction Generator (DFIG). This system is the main system in use today due to its multiple advantages.

The term power converter used here is understood as any topology that uses power electronic and its associated control. The power converter can be a topology formed by one or several back-to-back (reversible AC-DC-AC converters via a DC bus, where AC is alternating current and DC is direct current) or any equivalent topology.

Document US 2007/177314 A1 discloses a doubly-fed wind-power turbine comprising a generator with a rotor and a protection circuit according to the preamble of the independent claim.

As wind energy has become more widespread, the size of generators has increased in power and size. This means that the parasitic capacities inevitably present in a generator between phase and earth also increase in value.

In addition, the voltage forms generated by the modulation of the power converters generate voltages between the phase and earth that become currents via the system components, such as the parasitic capacities of the generator mentioned above. This interaction between the modulation of the power converter and the rest of the system can cause undesired effects, such as for example peak voltages between the phase and earth in the generator terminals that may shorten its useful life.

In order to prevent these detrimental effects, generator manufacturers use specific techniques and materials that reduce the value of said parasitic capacities. These techniques involve higher costs. Moreover, the value of the parasitic capacity produced in a generator varies between different models and manufacturers.

### DESCRIPTION OF THE INVENTION

As any skilled in the art knows, power converters use modulation techniques that generate square waves, which in turn excite the parasitic capacities of the system, causing the circulation of earth currents.

These currents generate overvoltages between phase and earth in the generator terminals, reducing the life of its insulation and bearings.

In order to achieve the objectives and solve the drawbacks indicated above, this invention presents a filter between the DC bus of the converter and earth forming a protection circuit in a wind-power turbine according to claim 1. This filter provides an additional path for the earth currents of the system and thus reduces overvoltages between phase and earth in the generator terminals.

The filter can have passive components such as resistors, inductances, capacities or a combination thereof. It can also have passive components as well as active components.

The filter allows eliminating overvoltages in the generator terminals for a wide range of parasitic capacities, making it possible to connect a same power converter to different generator models.

The design of the filter considers the modulation of the converter, the range of variation of the parasitic capacity of the generator and the topology of the system (transformers, inductances, earth connections, etc).

In order to aid towards a better understanding of this specification and as an integral part thereof, shown below is a drawing in which the object of the invention has been represented with an illustrative and non-limiting nature.

### BRIEF DESCRIPTION OF THE DRAWINGS

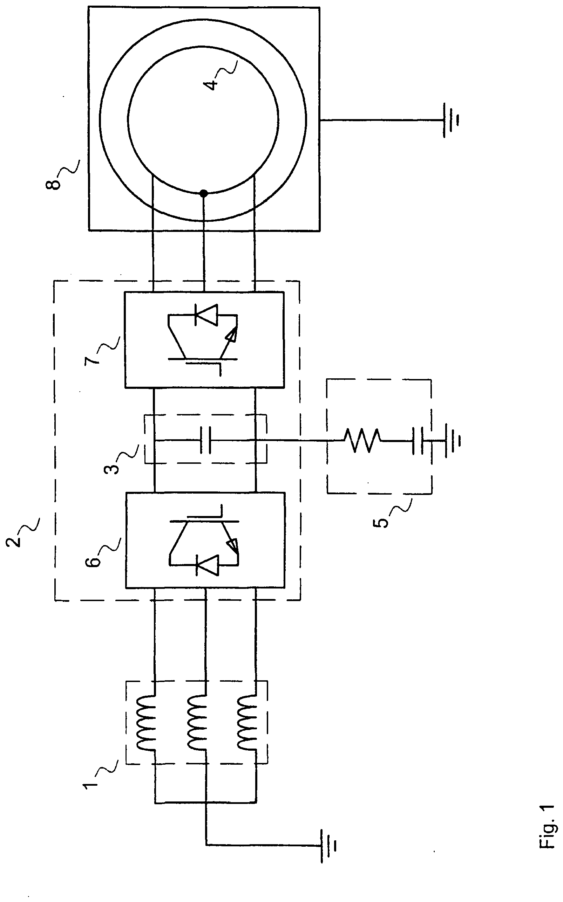

**Figure 1**. Shows a general operation diagram according to a preferred embodiment of the invention.

### DESCRIPTION OF ONE OR SEVERAL EMBODIMENTS OF THE INVENTION

Hereafter, an embodiment of the invention is described, citing reference numbers from Figure 1.

In a preferred embodiment, the solution proposed is represented by a doubly-fed wind turbine or doubly-fed wind-power generator, wherein the transformer (1) feeds the rotor (4) of the generator (8) via a power converter (2). Said transformer (1) has its neutral connected to earth.

The power converter (2) is a back-to-back topology (AC-DC-AC), comprising:
- A rectifier (6) to maintain the voltage level of the intermediate circuit at a specific value,
- An inverter (7) that converts direct current into alternating current, and
- A DC bus (3) or capacitor bus to couple the rectifier (6) and the inverter (7).

The converter (2) injects currents to the coils of the rotor (4) of the generator (8), which are insulated from earth.

In a preferred embodiment, between the negative of the DC bus (3) of the converter (2) and earth there is a filter included that consists in a first-order series filter (5) consisting of a resistor and a capacitor.

The point of connection of the series filter (5) to the DC bus (3) of the converter (2) makes no difference.

The first-order series filter (5) provides an additional path for the earth currents in the system, thus reducing the overvoltages between phase and earth generator (8) terminals for a wide range of parasitic capacities of the generator (8).

## Claims

1. Wind-power turbine comprising a generator (8) with a rotor (4) and a protection circuit, the wind-power turbine being a doubly-fed wind turbine and further comprising a power converter (2) and transformer (1) for feeding the rotor (4) of the generator (8) via the power converter (2), said transformer (1) comprising its neutral connected to the earth and the power converter (2) being a back-to-back topology (AC-DC-AC) comprising a rectifier (6), an inverter (7) and a DC bus (3) to couple the rectifier (6) and the inverter (7),
**characterized in that** the protection circuit comprises a filter connected between any point of the DC bus (3) of the wind-power generator converter and earth, the filter being a first-order series filter and consisting of at least one resistor and at least one capacitor.

2. Wind-power turbine according to claim 1, wherein the protection circuit comprises only one filter.

## Patentansprüche

1. Windkraftanlage umfassend einen Generator (8) mit einem Rotor (4) und einer Schutzschaltung, wobei die Windkraftanlage eine doppelt gespeiste Windkraftanlage ist und ferner einen Leistungswandler (2) und einen Transformator (1) zur Speisung des Rotors (4) des Generators (8) über den Leistungswandler (2) umfasst, wobei der genannte Transformator (1) aus seinem mit der Erde verbundenen Nulleiter besteht und der Leistungswandler (2) eine Back-to-Back-Topologie (AC-DC-AC) ist, die einen Gleichrichter (6), einen Wechselrichter (7) und einen Gleichstrom-Zwischenkreis (3) zur Kopplung des Gleichrichters (6) und des Wechselrichters (7) umfasst, **dadurch gekennzeichnet, dass** die Schutzschaltung einen Filter umfasst, der zwischen einem beliebigen Punkt des Gleichstrom-Zwischenkreises (3) des Windgenerator-Wandlers und Erde angeschlossen ist, wobei der Filter ein Serienfilter erster Ordnung ist und aus mindestens einem Widerstand und mindestens einem Kondensator besteht.

2. Windkraftanlage nach Anspruch 1, wobei die Schutzschaltung nur einen Filter umfasst.

## Revendications

1. Turbine éolienne comprenant un générateur (8) avec un rotor (4) et un circuit de protection, la turbine éolienne étant une turbine éolienne à double alimentation et comprenant en outre un convertisseur de puissance (2) et un transformateur (1) pour alimenter le rotor (4) du générateur (8) via le convertisseur de puissance (2), ledit transformateur (1) comprenant son neutre connecté à la terre et le convertisseur de puissance (2) étant une topologie dos à dos (CA-CC-CA) comprenant un redresseur (6), un onduleur (7) et un bus de CC (3) pour coupler le redresseur (6) et l'onduleur (7), **caractérisée en ce que** le circuit de protection comprend un filtre connecté entre un point quelconque du bus de CC (3) du convertisseur de générateur d'énergie éolienne et la terre, le filtre étant un filtre série de premier ordre et consistant en au moins une résistance et au moins un condensateur.

2. Turbine éolienne selon la revendication 1, dans laquelle le circuit de protection ne comprend qu'un seul filtre.
